# EUROPEAN PATENT SPECIFICATION

(11) **EP 1 825 238 B1**
(45) Date of publication and mention of the grant of the patent: **01.06.2011**
(21) Application number: 05826342.7
(22) Date of filing: 01.12.2005
(51) Int. Cl.: G01L 9/00, H01R 31/06, H05K 7/00

(54) **INSTRUMENT LOOP ADAPTER**
INSTRUMENTSCHLEIFENADAPTER
ADAPTATEUR DE CIRCUIT D'INSTRUMENT

(30) Priority: 15.12.2004 US 12660
(43) Date of publication of application: 29.08.2007
(73) Proprietor: Rosemount, Inc., Eden Prairie, MN 55344 (US)
(72) Inventor: HEDTKE, Robert, C., Young America, Minnesota 55397 (US)
(74) Representative: Vossius & Partner
(86) International application number: PCT/US2005/043739
(87) International publication number: WO 2006/065562

(56) References cited:
- DE-C1- 3 303 017
- US-A- 5 245 333
- US-B1- 6 511 337

## Description

### BACKGROUND OF THE INVENTION

Process variable transmitters are used to monitor the operation of industrial processes such as those in oil refineries, chemical processing plants and the like. Process variable transmitters such as pressure transmitters are typically situated in a fluid processing plant in locations where liquids, dust and humidity and various industrial contaminants may be present. In some environments, process liquids such as an acid or base solution can be present. Liquids can also include spray from hoses used to clean plant equipment. The liquids can drip, splash or spray onto the process transmitter and its electrical connections. Dust, humidity, and liquids in the environment can contaminate and degrade the electrical connections to the process transmitter.

Process transmitters are often fitted with sealed wiring compartments that can be connected with sealed electric conduits to protect the loop wiring and electrical connections from deterioration by contaminants. In the case of a miniaturized process transmitter that uses a header-type connector, however, there is no sealed wiring compartment to protect exposed electrical contact pins in the header from contaminants.

Instrument loop adapters have been provided that can connect to contact pins in a header on a process variable transmitter and that can protect the contact pins and the wiring from contaminants without the addition of a costly and bulky wiring compartment. Known environmentally sealed loop adapters, such as that of Fandrey et al. (U.S. Patent 6,511,337) provide an effective sealed solution. In some cases, the environmentally sealed loop adapters of Fandrey et al. include additional functionality, such as an RFI/EMI filter. While this additional functionality of the loop adapter has proven useful, there exists a need to address a wide array of additional applications to which the instrument and loop adapter may be applied. Providing a loop adapter with new functions and/or features would help address the significant array of various applications.

### SUMMARY OF THE INVENTION

An instrument loop adapter includes an interface portion that is configured to couple to a header of a miniature process variable transmitter. In some embodiments, the interface portion includes a standardized cable output portion. In other embodiments, a cable portion is coupled to the interface portion. Additional functionality is provided in the interface portion, the cable portion or both portions. The additional functionality can include circuits that provide features not present in the process variable transmitter.

### BRIEF DESCRIPTION µOF THE DRAWINGS

FIG. 1 is a cross-sectional illustration of a miniature pressure transmitter with a header and contact pins.
FIG. 2 is a cross-sectional illustration of a loop adapter with an RFI/EMI filter installed on a header.
FIG. 3 is an illustration of a loop adapter with a connector for a standard cordset.
FIG. 4 is a diagrammatic view of an instrument loop adapter having active circuitry in accordance with an embodiment of the present invention.
FIG. 5 is a diagrammatic view of an instrument loop adapted having an additional sensor input circuit in accordance with an embodiment of the present invention.
FIG. 6 is a diagrammatic view of an instrument loop adapter having an intrinsic safety barrier in accordance with an embodiment of the invention.
FIG. 7 is a diagrammatic view of an instrument loop adapter having a controller in accordance with an embodiment of the present invention.
FIG. 8 is a diagrammatic view of an instrument loop adapter having multiple types of outputs in accordance with an embodiment of the present invention.
FIG. 9 is a diagrammatic view of an instrument loop adapter in accordance with an embodiment of the present invention.
FIG. 10 is a diagrammatic view of an instrument loop adapter in accordance with another embodiment of the present invention.

### DETAILED DESCRIPTION OF THE ILLUSTRATED EMBODIMENTS

An electrical adapter connects a process variable transmitter to a multi-wire instrument circuit. The adapter protects contact pins, sockets and loop wires from damage due to liquids that are sprayed, dripped or splashed on the process variable transmitter, as well as dust, humidity and other contaminants. The adapter can be used to provide any type of electrical connection to the transmitter such as a 2 wire loop or a digital data connection. The adapter includes additional features and/or functionality as will be set forth in greater detail below.

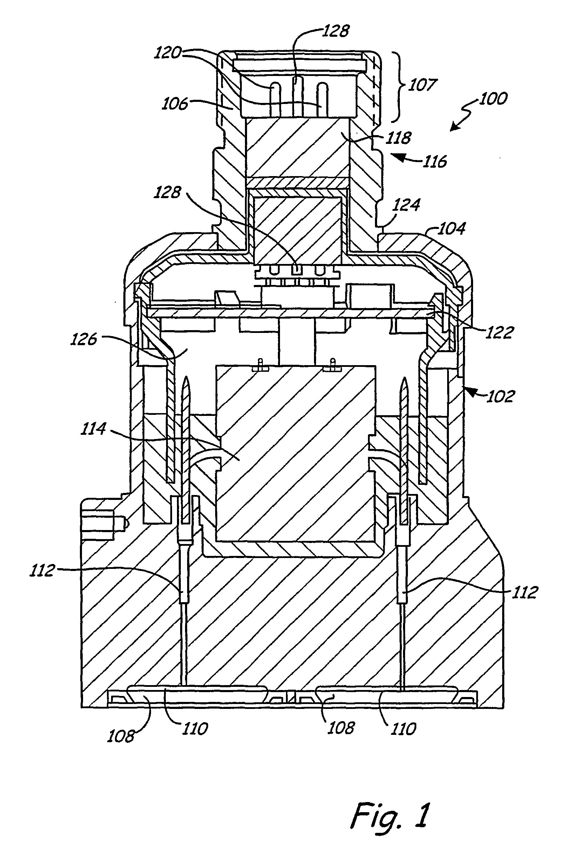

FIG. 1 is a cross-sectional view of a differential pressure transmitter 100. Transmitter 100 is an example of process variable transmitter on which an adapter (not shown in FIG. 1) can be used to make connections to an instrument circuit.

Transmitter 100 includes a miniature transmitter housing 102 with an outer wall 104 sealed to an electrical connector header 106. Transmitter housing 102 includes two coplanar fluid inlets 108 that include isolator diaphragms 110. Isolator fluid 112 sealed in passageways transmits differential pressure from the inlets 108 to a capacitive differential pressure sensor 114 in transmitter 100.

The process variable transmitter 100 includes a sealed feedthrough electrical connector 116 with a cylindrical outer shell or header 106 and a sealed insulating feedthrough 118 with electrical contact or pins 120. Header 106 has external threads 107. Two or more of the contact pins 120 carry loop data to communicate with process variable transmitter 100.

Circuit board 122 electrically couples to pressure sensor 114 and processes data from pressure sensor 114 and controls the loop current on contact pins 120 to provide a representation of the differential pressure at inlets 108. The pressure can be represented as a 4-20 mA analog current, or can be represented in any of a variety of know digital protocols such as HART, CAN, Foundation Fieldbus, Profibus protocols and other digital communication protocols known in the fluid process control industry.

The outer wall 104 is preferably welded together with the header 106 along a circular weld joint 124, forming a sealed cavity 126 inside the housing 102. A capillary tube 128 is provided in the insulating feedthrough 118 for testing for leaks prior to sealing the tube 128 to provide hermetic sealing of sealed cavity 126 in miniature differential pressure transmitter 100.

Transmitter 100 as illustrated in FIG. 1 is a miniature type transmitter that does not include a sealed wiring compartment for making connections in the field to an instrument circuit. Contact pins 120 and insulating feedthrough 118 are exposed on the outside of process variable transmitter 100 and are subject to undesired contact with contaminants such as dust, humidity or liquids that are sprayed, dripped or spilled in a fluid processing plant environment.

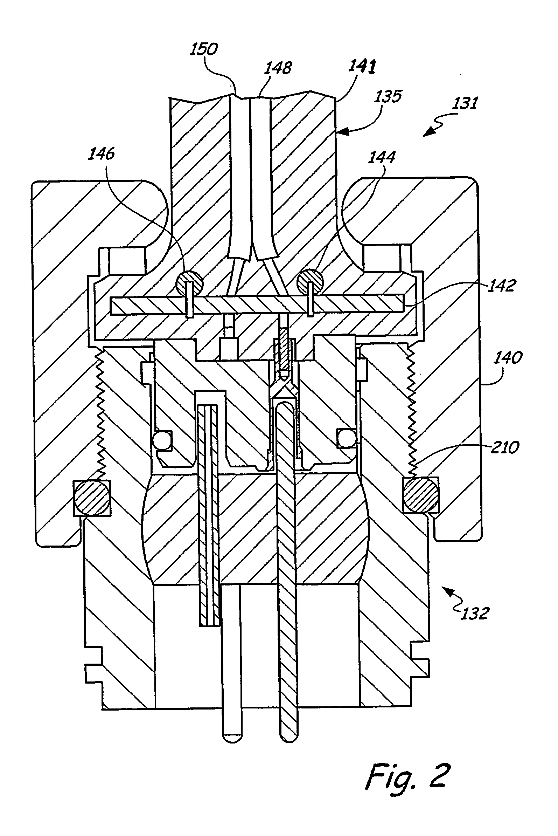

FIG. 2 is a diagrammatic view of an instrument loop adapter coupled to a header of a process variable transmitter. Instrument loop adapter 131 is shown in FIG. 2 coupled to header 132. Adapter 131 is embodied in the form of a cable assembly 135 having an interface portion 140 and a cable portion 141. Interface portion 140 is configured to couple to header 132 and preferably does so via threaded engagement. Thus, in embodiments where header 132 has an externally threaded surface, interface portion 140 will have a suitable internally threaded portion to engage the external threads of header 132.

Circuit board 142 is disposed within interface portion 140 and includes a number of suitable electrical components 144, 146. Components 144, 146 may interact with the instrument loop coupled thereto by virtue of conductors 148, 150, and/or they also interact with a process variable transmitter coupled thereto via header 132. Components 144, 146 on circuit board 142 can be used to provide one or more additional functions that are useful during operation and/or maintenance of the process variable transmitter.

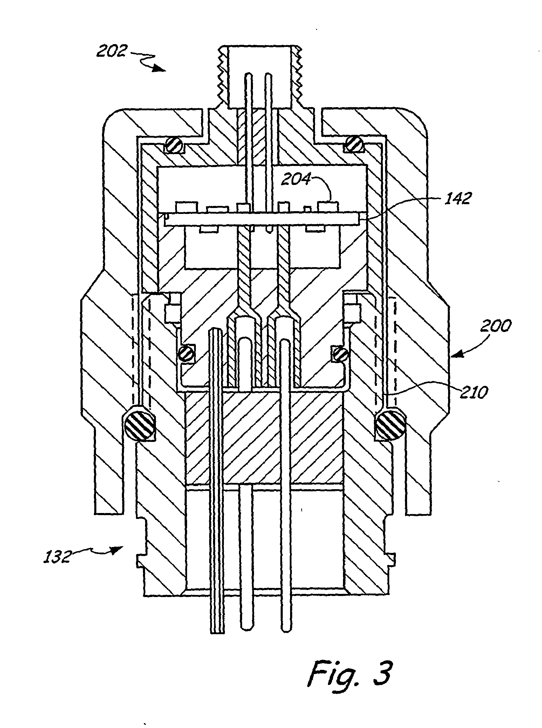

FIG. 3 is a diagrammatic view of an instrument loop adapter in accordance with another embodiment of the present invention. Loop adapter 200 is not illustrated with an associated cable assembly. Instead, loop adapter 200 couples to header 132 of a process variable transmitter and provides a standardized cable output 202. Output 202 is one of any number of suitable cable interfaces. Adapter 200 preferably provides an environmental seal to header 132 as descried in greater detail in U.S. Patent 6,511,337. Adapter 200 also includes a circuit board 142 with circuit components 204 disposed thereon. As described with respect to FIG. 2, components 204 on circuit board 142 can provide any of the functions and/or circuits listed above with respect to adapter 131. Instrument loop adapters 131 and 200 are similar in the sense that they both couple to the external threads 210 of process variable transmitter header 132.

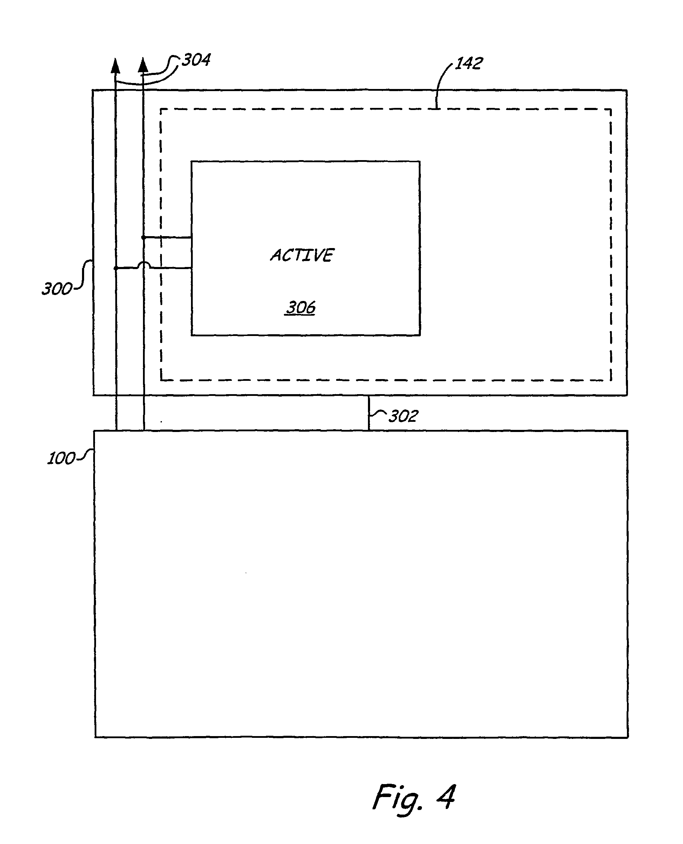

FIG. 4 is a diagrammatic view of an instrument loop adapter having active circuitry in accordance with an embodiment of the present invention. Instrument loop adapter 131 is coupled to process variable transmitter as indicated diagrammatically at reference numeral 302. Process loop 304 is physically coupled to adapter 300. Active circuitry 306 on board 142 is electrically coupled to loop 304. Although FIG. 4 illustrates circuitry 306 coupled in parallel to loop 304, it is expressly contemplated that active circuitry 306 could be placed in series instead. As used herein, active circuitry 306 is any electronic circuitry that uses power. Active circuitry 306 is thus distinguishable from passive circuitry such as resistors and capacitors, as well as combinations of such devices like passive filters. Active circuitry 306 can be a single active circuit component, or it can be a combination of components. As long as one component in a combination of components is active, the combination will be considered active. Since active circuit 306 uses power, it must be coupled to a power source. Such power can be provided by the loop, by the process variable transmitter, or even by an external power source.

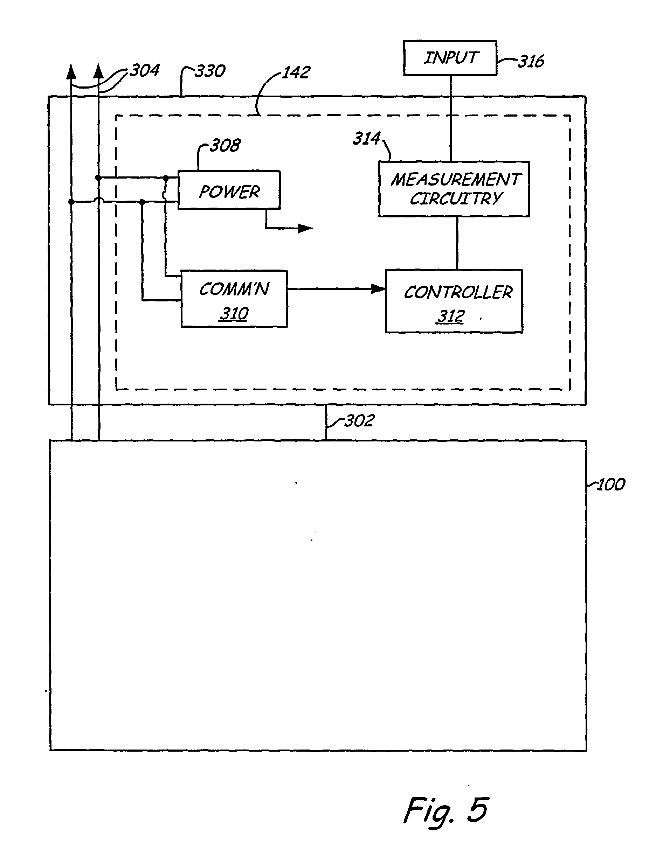

FIG. 5 is a diagrammatic view of an instrument loop adapted having an additional sensor input circuit in accordance with an embodiment of the present invention. Adapter 300 is coupled to process variable transmitter 100 as indicated at reference numeral 302. Adapter 300 is also electrically coupled to loop 304. Adapter 330 includes power supply circuitry 308 that provides suitable power to all active components on board 142 using power received from loop 304. Adapter 330 also includes its own loop communicator 310 that is also coupled to loop 304. This arrangement allows adapter 330 to communicate over loop 304 independently of process variable transmitter 100 to which it is connected. A controller 312, which is preferably a microprocessor, is coupled to loop communicator 310. Controller 312 is also coupled to measurement circuitry 314 which itself is coupled to additional sensor input 316. Input 316 can be located on adapter 330, on process variable transmitter 100 or any other suitable location. Any suitable sensor can be coupled to input 316 as desired.

In one embodiment, input 316 is a temperature sensor input and receives a temperature sensor, such as an RTD. Measurement circuitry 314 is adapted to generate a signal that is indicative of a characteristic of the sensor. For example, in the RTD embodiment, circuitry 314 drives a small current through the RTD and measures the resultant voltage drop across the RTD. Measurement circuitry 314 can also include an analog-to-digital converter, if desired, which can convert the analog representation (i.e. sensed voltage) into a digital representation thereof. Measurement circuitry 314 provides an indication of sensor response to controller 312. In one embodiment, controller 312 uses the indication from measurement circuitry 314 to adjust or otherwise compensate the signal of the process variable transmitter based upon the response of the sensor coupled to input 316. Thus, in embodiments where process variable transmitter 100 is a pressure transmitter and the pressure sensor output can vary with temperature, adapter 330 can be used to easily adjust the output as the temperature varies. This arrangement is advantageous for any combination of process variable transmitters and sensors where the process variable transmitter is affected by a parameter that can be measured and adjusted in a predictable manner.

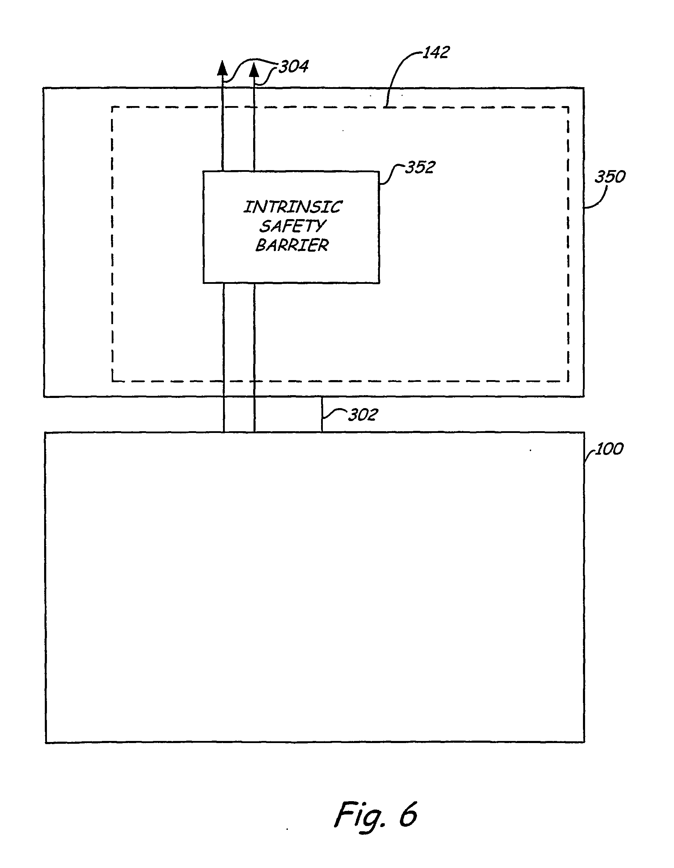

FIG. 6 is a diagrammatic view of instrument loop adapter 350 in accordance with an embodiment of the present invention. Instrument loop adapter 350 includes circuit board 142 having an intrinsic safety barrier circuit 352 thereon. Barrier circuit 352 generally limits the amount of energy that can flow from the process variable transmitter in response to failure type events. Intrinsic safety circuitry is known and generally functions to limit energy flow during fault conditions. Additional details regarding intrinsic safety can be found in the intrinsic safety specification as set forth in the Factory Mutual Approval Standard entitled "Intrinsically Safe Apparatus and Associated Apparatus for Use in Class I, II, and III, Division 1 Hazardous (Classified) Locations," Class Number 3610, published October 1988.

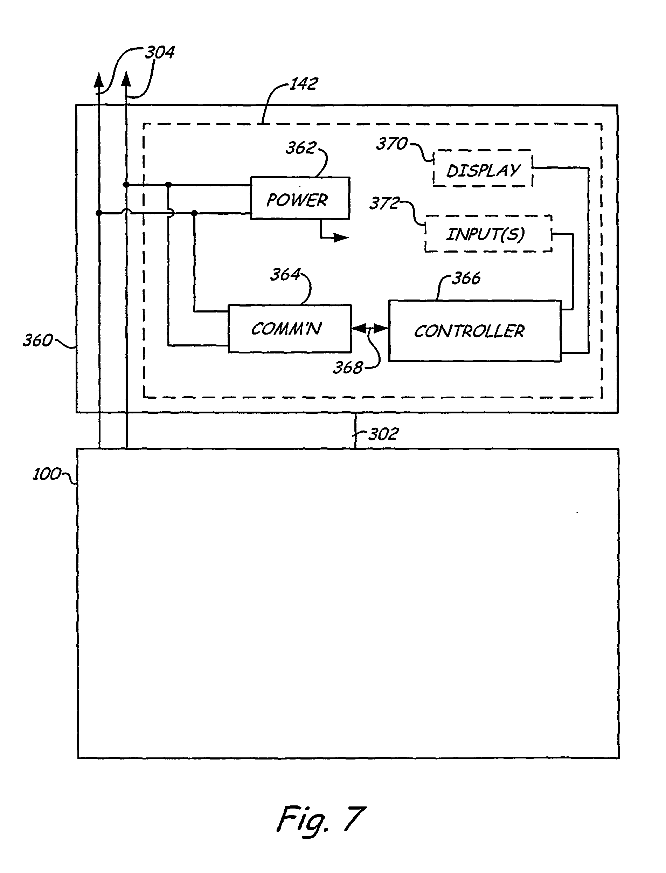

FIG. 7 is a diagrammatic view of instrument loop adapter 360 in accordance with an embodiment of the present invention. Instrument loop adapter 360 bears some similarities to instrument loop adapter 330 described with respect to FIG. 5. However, instrument loop adapter 360 does not include any sensor input. Instead, loop adapter 360 includes power module 362 coupled to instrument loop 304 and adapted to provide power to communication module 364 and controller 366. Communication module 364 is coupled to instrument loop 304 and is adapted to communicate thereon preferably using a standard process industry communication protocol, such as HART^{®} or FOUNDATION^{™} Fieldbus. Controller 366 is preferably a microprocessor that communicates bi-directionally, as indicated at line 368 on instrument loop 304 via communication module 364. Since instrument loop adapter 360 includes its own controller 366 powered by instrument loop 304, it can provide features of redundancy, diagnostics, and/or any other suitable function facilitated by its programmable nature. In one embodiment, loop adapter 360 includes features that facilitate local user interaction with the process variable transmitter and/or loop adapter. Display 370, indicated in phantom, is preferably a miniature LCD display. User input(s) 372 are also illustrated in phantom and may be provided proximate interface portion 140, or at a location away from the interface portion 140 along cable 142.

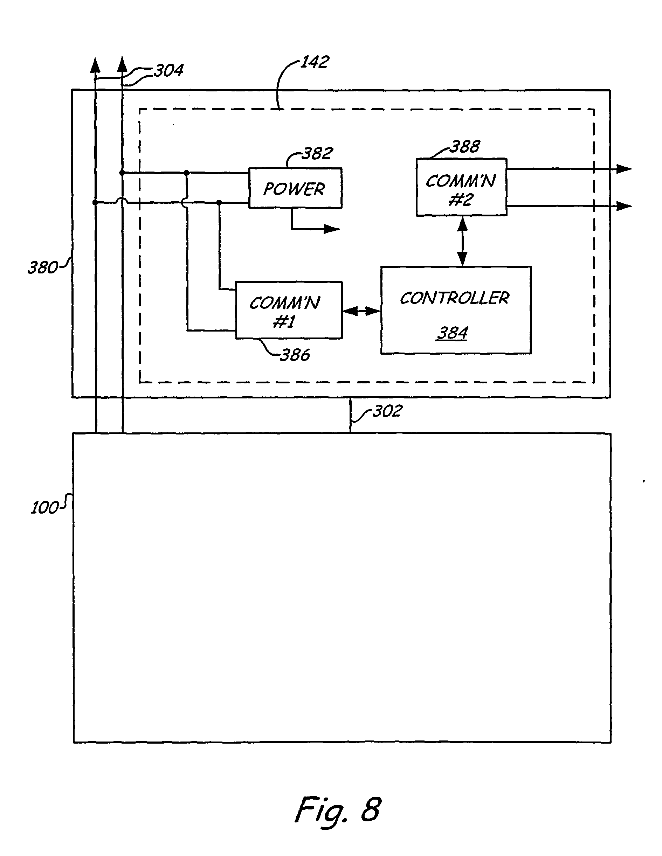

FIG. 8 is a diagrammatic view of an instrument loop adapter in accordance with an embodiment of the present invention. Loop adapter 380 includes power module 382 which may be identical to either power modules 308 or 362 described above. Additionally, loop adapter 380 includes controller 384 which is preferably a microprocessor. Instrument loop adapter 380 differs primarily from embodiments described above in that instrument loop adapter 380 includes a plurality of communication controllers. As illustrated, loop adapter 380 includes a first communication module 386 coupled to controller 384 for bi-directional communication therewith, and operably coupled to instrument loop 304 for communication thereon. Additionally, loop adapter 380 also includes a second communication controller 388 coupled to controller 384 for communication in accordance with a second type of output. In one embodiment, communication controller 386 is adapted to communicate on instrument loop 304 in accordance with the HART^{®} protocol while communication controller 388 is adapted for communication in accordance with the FOUNDATION^{™} Fieldbus industry protocol. However, any combination of communication modules can be used as long as the plurality of communication modules provide communication in different types. Further information regarding the circuitry used to provide multiple types of outputs can be found in United States Patent 5,245,333 to Anderson et al. That patent provides a arrangement where multiple types of outputs can be provided to various devices. Thus, board 142 can allow using suitable circuitry can allow the process variable transmitter to communicate with a first external device using a first type of communication, such as employing AC signals, and communicate with a second external device using a second type of communication, such as DC signals.

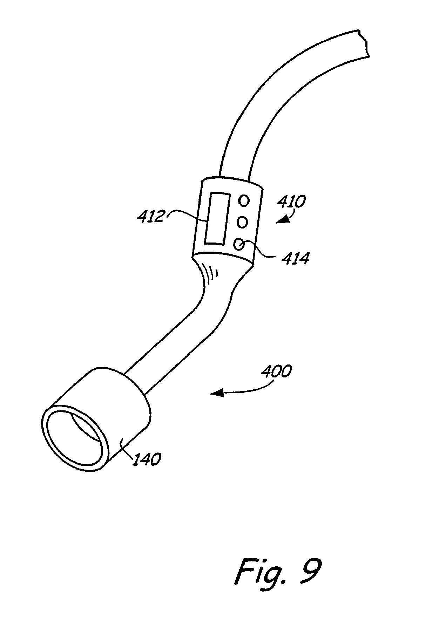

FIG. 9 is a diagrammatic view of instrument loop adapter 400 in accordance with another embodiment of the present invention. Adapter 400 couples to a header of a process variable transmitter as illustrated in FIG. 2. Adapter 400 includes a local interface 310 disposed away from interface region 140. Local user interface 410 includes suitable 10 elements, such as a display 412, which is preferably a miniature LCD display and one or more buttons 414 to allow a user to interact with the process variable transmitter coupled to interface region 140. Interface 410 can also includes suitable circuitry to monitor signals between the process variable transmitter and other devices on the instrument loop. Such monitoring can facilitate analysis using data logging and/or preventative maintenance.

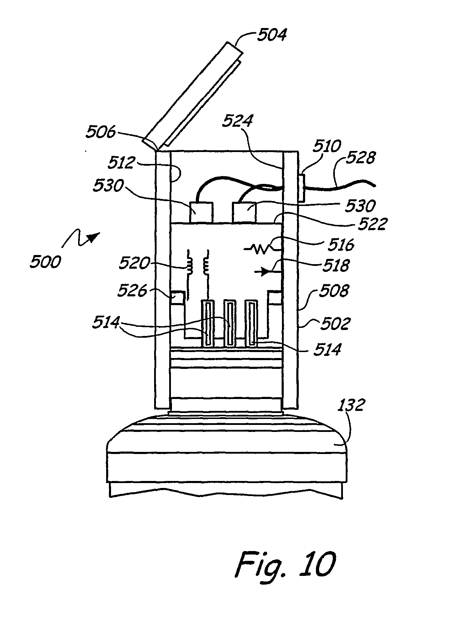

FIG. 10 is a diagrammatic view of an instrument loop adapter 500 in accordance with another embodiment of the present invention. Loop adapter 500 is adapted to couple to header 132 of a process instrument. Adapter 500 includes preferably cylindrical sidewall 502 that is shaped and sized to mate with header 132 of the process device. Sidewall 502 is preferably molded as a single assembly with cap 504. Further, cap 504 is preferably hingedly coupled to sidewall 502 via hinge 506 that is preferably molded integrally with cap 504 and sidewall 502. Sidewall 502 and cap 504 preferably include a pliant outer layer 508 that helps seal adapter 500 to header 132. Additionally, pliant layer 508 helps facilitate sealing between sidewall 502 and cap 504. Finally, pliant outer layer 508 also helps generate self-sealing wire entry 510. The pliant outer layer can be formed of any material that is resiliently deformable, but is preferably formed of an elastomer. It is important in the selection of the pliant material for layer 508 that the material be operable over temperature extremes that the loop adapter 500 is expected to encounter. Additionally, if loop adapter 500 will be exposed to direct sunlight, or other sources of ultraviolet radiation, the material selected for layer 508 should be able to withstand such repeated exposure.

Chamber 512 within adapter 500 preferably includes a number of electronic components, as well as suitable connectors 514 for coupling to individual pins on header 132. Preferably, connectors 514 are suitable bayonet connections that are sized and appropriately placed to mate with corresponding connectors in or on header 132. Electronic components 516, 518, and 520 can be any suitable components providing desired functions. For example, component 516 can be one or more resistors, component 518 may be one or more diodes, and component 520 can include one or more isolation components, such as transformers, or capacitors. Electrical components 516, 518, and 520 can be arranged in known circuits to provide transient protection, RFI filtering, power sharing, etc. Placing diode 518 in a reverse polarity configuration can ensure that the process device will not inadvertently dump excess energy onto the process loop during fault conditions. Electrical components 516, 518, and 520 can be disposed on a small circuit board sized to fit within chamber 512. Additionally, or alternatively, the electrical components 516, 518, and 520 can be molded within chamber 512 by a mold 522 that may provide additional functions of heat sinking, while hermetically sealing portion 524 of chamber 512 from portion 526. Finally, adapter 500 also preferably includes a wiring entry that is self-sealing. Thus, wires 528 passing through entry 510 are automatically hermetically sealed such that though wires 528 pass through sidewall 502, air or other gases does not. Within chamber 512, wires 528 couple to suitable wire terminations 530 to enable the field wiring to couple to the process device.

Although the present invention has been described with reference to preferred embodiments, workers skilled in the art will recognize that changes may be made in form and detail without departing from the scope of the invention.

## Claims

1. An instrument loop adapter (131, 360) for coupling a process variable transmitter (100) to an instrument loop, the adapter comprising:
an interface portion (140) adapted to engage a header (132) of the process variable transmitter (100); and
a circuit board (142) disposed within the interface portion (140), the circuit board (142) having active circuitry (306) thereon, said active circuitry (306) comprising:
a communication module (364) coupled to the instrument loop (304) and adapted to communicate thereon; and
a controller (366) adapted to communicate bi-directionally with the instrument loop (304) via the communication module (364);
wherein a power module (362) is coupled to the instrument loop (304) and adapted to provide power to the communication module (364) and the controller (366).

2. The instrument loop adapter of claim 1, wherein the active circuitry is sensor input circuitry.

3. The instrument loop adapter of claim 2, wherein the sensor input circuitry is RTD input circuitry.

4. The instrument loop adapter of claim 2, wherein the sensor input circuitry includes an analog-to-digital converter.

5. The instrument loop adapter of claim 1, and further comprising a cable portion (141) coupled to the interface portion, the cable portion forming the loop connection.

6. The instrument loop adapter of claim 1, wherein the interface portion includes a process industry standard cable output (202)_{.}

7. The instrument loop adapter of claim 2, wherein the active circuitry includes a microprocessor.

8. The instrument loop adapter of claim 7, and further comprising a cable portion coupled to the interface portion, the cable portion forming the loop connection.

9. The instrument loop adapter of claim 2, wherein the active circuitry includes a display.

10. The instrument loop adapter of claim 9, and further comprising a cable portion coupled to the interface portion, the cable portion having conductors therein to couple to the loop.

11. The instrument loop adapter of claim 2, wherein the active circuitry provides multiple types of outputs.

12. The instrument loop adapter of claim 11 and further comprising a cable portion coupled to the interface portion, the cable portion having conductors therein to couple to the loop.

13. The instrument loop adapter of claim 11, wherein the circuitry communicates with the process variable transmitter in accordance with a first industry standard protocol, and interacts on the loop in accordance with a second industry standard protocol.

14. The instrument loop adapter of claim 2, wherein the active circuitry provides a local output.

15. The instrument loop adapter of claim 14, and further comprising a cable portion coupled to the interface portion, the cable portion having conductors therein to couple to the loop.

16. The instrument loop adapter of claim 2, wherein the active circuitry is coupled to a local user input.

17. The instrument loop adapter of claim 16, and further comprising a cable portion coupled to the interface portion, the cable portion having conductors therein to couple to the loop.

18. The instrument loop adapter of claim 1, wherein the interface includes a threaded portion to engage the header of the process variable transmitter.

19. The loop adapter of claim 1, wherein the interface portion includes a cylindrical sidewall and a cap adapted to mate thereto.

20. The instrument loop adapter of claim 19, wherein at least one of the cylindrical sidewall and the cap includes a pliant outer layer.

21. The instrument loop adapter of claim 20, wherein the pliant outer layer is formed of an elastomer.

22. The instrument loop adapter of claim 1, wherein the circuit board is over molded, and wherein the over molding creates a hermetic seal within a chamber of the instrument loop adapter.

23. The instrument loop adapter of claim 1, and further comprising a self-sealing wiring entry.

24. A method of coupling a process variable transmitter to an instrument loop, the method comprising:
providing an interface portion of an instrument loop adapter according to any of claims 1 to 23; and
coupling the interface portion to a header of the process variable transmitter.

## Patentansprüche

1. Instrumentschleifenadapter (131, 360) zum Ankoppeln eines Prozessgrößentransmitters (100) an eine Instrumentschleife, wobei der Adapter aufweist:
einen Schnittstellenteil (140), der für den Eingriff mit einem Kopf (132) des Prozessgrößentransmitters (100) angepasst ist; und
eine innerhalb des Schnittstellenteils (140) angeordnete Leiterplatte (142), wobei auf der Leiterplatte (142) eine aktive Schaltungsanordnung (306) untergebracht ist, wobei die aktive Schaltungsanordnung (306) aufweist:
ein Kommmunikationsmodul (364), das mit der Instrumentschleife (304) gekoppelt und an die Kommunikation mit dieser angepasst ist; und
einen Regler (366), der angepasst ist, bidirektional mit der Instrumentschleife (304) über das Kommmunikationsmodul (364) zu kommunizieren;
wobei ein Stromversorgungsmodul (362) mit der Instrumentschleife (304) gekoppelt und angepasst ist, Strom an das Kommmunikationsmodul (364) und den Regler (366) zu liefern.

2. Instrumentschleifenadapter nach Anspruch 1, wobei die aktive Schaltungsanordnung eine Sensoreingangsschaltung ist.

3. Instrumentschleifenadapter nach Anspruch 2, wobei die Sensoreingangsschaltung eine Widerstands-Temperaturfühler-(RTD)-Eingangsschaltung ist.

4. Instrumentschleifenadapter nach Anspruch 2, wobei die Sensoreingangsschaltung einen Analog-Digital-Umsetzer aufweist.

5. Instrumentschleifenadapter nach Anspruch 1, der ferner einen mit dem Schnittstellenteil gekoppelten Kabelabschnitt (141) aufweist, wobei der Kabelabschnitt den Schleifenanschluss bildet.

6. Instrumentschleifenadapter nach Anspruch 1, wobei der Schnittstellenteil einen Prozesskabelausgang (202) nach Industrienorm aufweist.

7. Instrumentschleifenadapter nach Anspruch 2, wobei die aktive Schaltungsanordnung einen Mikroprozessor aufweist.

8. Instrumentschleifenadapter nach Anspruch 7, der ferner einen mit dem Schnittstellenteil gekoppelten Kabelabschnitt aufweist, wobei der Kabelabschnitt den Schleifenanschluss bildet.

9. Instrumentschleifenadapter nach Anspruch 2, wobei die aktive Schaltungsanordnung ein Display aufweist.

10. Instrumentschleifenadapter nach Anspruch 9, der ferner einen mit dem Schnittstellenteil gekoppelten Kabelabschnitt aufweist, wobei der Kabelabschnitt Leiter zur Ankopplung an die Schleife aufweist.

11. Instrumentschleifenadapter nach Anspruch 2, wobei die aktive Schaltungsanordnung mehrere Ausgangstypen bereitstellt.

12. Instrumentschleifenadapter nach Anspruch 11, der ferner einen mit dem Schnittstellenteil gekoppelten Kabelabschnitt aufweist, wobei der Kabelabschnitt Leiter zur Ankopplung an die Schleife aufweist.

13. Instrumentschleifenadapter nach Anspruch 11, wobei die Schaltungsanordnung mit dem Prozessgrößentransmitter gemäß einem ersten Industriernorm-Protokoll kommuniziert und mit der Schleife gemäß einem zweiten Industriernorm-Protokoll zusammenwirkt.

14. Instrumentschleifenadapter nach Anspruch 2, wobei die aktive Schaltungsanordnung einen lokalen Ausgang bereitstellt.

15. Instrumentschleifenadapter nach Anspruch 14, der ferner einen mit dem Schnittstellenteil gekoppelten Kabelabschnitt aufweist, wobei der Kabelabschnitt Leiter zur Ankopplung an die Schleife aufweist.

16. Instrumentschleifenadapter nach Anspruch 2, wobei die aktive Schaltungsanordnung an einen lokalen Nutzerausgang gekoppelt ist.

17. Instrumentschleifenadapter nach Anspruch 16, der ferner einen mit dem Schnittstellenteil gekoppelten Kabelabschnitt aufweist, wobei der Kabelabschnitt Leiter zur Ankopplung an die Schleife aufweist.

18. Instrumentschleifenadapter nach Anspruch 1, wobei die Schnittstelle einen Gewindeteil für den Eingriff mit dem Kopf des Prozessgrößentransmitters aufweist.

19. Instrumentschleifenadapter nach Anspruch 1, wobei der Schnittstellenteil eine zylinderförmige Seitenwand und eine dazu passende Kappe aufweist.

20. Instrumentschleifenadapter nach Anspruch 19, wobei die zylinderförmige Seitenwand oder die Kappe oder beide eine biegsame Außenschicht aufweisen.

21. Instrumentschleifenadapter nach Anspruch 20, wobei die biegsame Außenschicht aus einem Elastomer hergestellt ist.

22. Instrumentschleifenadapter nach Anspruch 1, wobei die Leiterplatte umgossen ist, und wobei das Umgießen einen luftdichten Abschluss innerhalb einer Kammer des Instrumentschleifenadapters erzeugt.

23. Instrumentschleifenadapter nach Anspruch 1, der ferner eine selbstabdichtende Leitungseinführung aufweist.

24. Verfahren zum Ankoppeln eines Prozessgrößentransmitters an eine Instrumentschleife, wobei das Verfahren aufweist:
Bereitstellen eines Schnittstellenteils eines Instrumentschleifenadapters nach einem der Ansprüche 1 bis 23; und
Ankoppeln des Schnittstellenteils an einen Kopf des Prozessgrößentransmitters.

## Revendications

1. Adaptateur en boucle d'instrument (131, 360) pour coupler un transmetteur à variables de processus (100) à une boucle d'instrument, l'adaptateur comportant :
une partie d'interface (140) adaptée pour engager un collecteur (132) du transmetteur à variables de processus (100) ; et
une carte de circuits (142) disposée à l'intérieur de la partie d'interface (140), la carte de circuits (142) comportant un circuit actif (306), ledit circuit actif (306) comportant :
un module de communication (364) couplé à la boucle d'instrument (304) et adapté pour communiquer ; et
un contrôleur (366) adapté pour communiquer bidirectionnellement avec la boucle d'instrument (304) par l'intermédiaire du module de communication (364) ;
dans lequel un module de puissance (362) est couplé à la boucle d'instrument (304) et adapté pour délivrer de la puissance au module de communication (364) et au contrôleur (366).

2. Adaptateur en boucle d'instrument selon la revendication 1, dans lequel le circuit actif est un circuit d'entrée de capteur.

3. Adaptateur en boucle d'instrument selon la revendication 2, dans lequel le circuit d'entrée de capteur est un circuit d'entrée RTD.

4. Adaptateur en boucle d'instrument selon la revendication 2, dans lequel le circuit d'entrée de capteur comprend un convertisseur analogique-numérique.

5. Adaptateur en boucle d'instrument selon la revendication 1, et comportant en outre une partie de câble (141) couplée à la partie d'interface, la partie de câble formant la connexion en boucle.

6. Adaptateur en boucle d'instrument selon la revendication 1, dans lequel la partie d'interface comprend une sortie de câble standard industriel de processus (202).

7. Adaptateur en boucle d'instrument selon la revendication 2, dans lequel le circuit actif comprend un microprocesseur.

8. Adaptateur en boucle d'instrument selon la revendication 7, et comportant en outre une partie de câble couplée à la partie d'interface, la partie de câble formant la connexion en boucle.

9. Adaptateur en boucle d'instrument selon la revendication 2, dans lequel le circuit actif comprend un affichage.

10. Adaptateur en boucle d'instrument selon la revendication 9, et comportant en outre une partie de câble couplée à la partie d'interface, la partie de câble comportant des conducteurs pour un couplage à la boucle.

11. Adaptateur en boucle d'instrument selon la revendication 2, dans lequel le circuit actif délivre de multiples types de sorties.

12. Adaptateur en boucle d'instrument selon la revendication 11 et comportant en outre une partie de câble couplée à la partie d'interface, la partie de câble possédant des conducteurs pour un couplage à la boucle.

13. Adaptateur en boucle d'instrument selon la revendication 11, dans lequel le circuit communique avec le transmetteur à variables de processus conformément à un premier protocole industriel standard, et interagit sur la boucle conformément à un second protocole industriel standard.

14. Adaptateur en boucle d'instrument selon la revendication 2, dans lequel le circuit actif délivre une sortie locale.

15. Adaptateur en boucle d'instrument selon la revendication 14, et comportant en outre une partie de câble couplée à la partie d'interface, la partie de câble possédant des conducteurs pour un couplage de la boucle.

16. Adaptateur en boucle d'instrument selon la revendication 2, dans lequel le circuit actif est couplé à une entrée d'utilisateur locale.

17. Adaptateur en boucle d'instrument selon la revendication 16, et comportant en outre une partie de câble couplée à la partie d'interface, la partie de câble possédant des conducteurs pour un couplage à la boucle.

18. Adaptateur en boucle d'instrument selon la revendication 1, dans lequel l'interface comprend une partie filetée pour engager le collecteur du transmetteur à variables de processus.

19. Adaptateur en boucle selon la revendication 1, dans lequel la partie d'interface comprend une paroi latérale cylindrique et une coiffe adaptée pour y être accouplée.

20. Adaptateur en boucle d'instrument selon la revendication 19, dans lequel au moins l'une de la paroi latérale cylindrique et de la coiffe comprend une couche externe pliante.

21. Adaptateur en boucle d'instrument selon la revendication 20, dans lequel la couche externe pliante est composée d'un élastomère.

22. Adaptateur en boucle d'instrument selon la revendication 1, dans lequel la carte de circuit est surmoulée, et dans lequel le surmoulage créée un joint hermétique à l'intérieur d'une cavité de l'adaptateur en boucle d'instrument.

23. Adaptateur en boucle d'instrument selon la revendication 1, et comportant en outre une entrée de câblage auto-étanche.

24. Procédé de couplage de transmetteur à variables de processus à une boucle d'instrument, le procédé comportant :
La présence d'une partie d'interface d'un adaptateur en boucle d'instrument selon l'une quelconque des revendications 1 à 23 ; et
le couplage de la partie d'interface à un collecteur du transmetteur à variables de processus.
